# EUROPEAN PATENT APPLICATION

(11) **EP 1 585 275 A1**
(43) Date of publication of application: **12.10.2005**
(21) Application number: 05101763.0
(22) Date of filing: 08.03.2005
(51) Int. Cl.: H04L 12/58

(54) **Dynamic private email aliases**

(30) Priority: 12.03.2004 GB 0405566
(71) Applicant: Hewlett-Packard Development Company, L.P., Houston, TX 77070 (US)
(72) Inventor: Velayudham, Madan Ganesh, 560052, Bangalore (IN)
(74) Representative: Jones, Bruce Graeme Roland

(57) **Abstract**

The invention relates to a method and apparatus for dynamically creating email aliases which are related to a communication context. The method includes the steps of establishing one or more identification indicia, where the indicia correspond to identifying strings related to the communication context, establishing a parameter string comprising one or more of the identification indicia; and prepending the parameter string to a qualified domain name thereby creating an email alias which contains information relating to the communication context. The identification indicia incorporates strings including one or more of the name or identifier of the creator of the communication context, the number of participants in the communication context, the date of creation of the email alias, group permissions and the lease period for the email alias. The invention also relates to a method of processing an email alias, the alias related to a communication context, including the steps of: parsing the email alias to extract identification indicia therefrom; identifying strings in the identification indicia corresponding to one or more of: data relating to a communication context creators name or identifier, the number of participants in the communication context, the date of creation of the email alias, group permissions and the lease period for the email alias. The invention may find application in a number of applications, ideally in the management of discussion lists, although it may be used in financial transactions and other transactions which requires security and/or anonymity.

## Description

### Technical Field

The present invention relates to th e creation and management of ad-hoc email addresses or aliases. More particularly, although not exclusively, the invention relates to the creation and management of email discussion lists using an email alias. The invention may also be applied in the context of transactions where the identities of the participants need to remain hidden.

### Background Art

There are specific situations where the creation of ad hoc or dynamic email addresses or aliases is extremely useful. For example, a user or group of users may require a temporary central contact email address, often called an alias, so that the users can remain anonymous when interacting in specific communication contexts. By way of example, email aliases are very useful for creating and administrating ad-hoc mailing lists or email-based discussion groups.

Considering this communication context, traditionally, mailing or discussion lists have been administered according to the LISTSERV paradigm which allows an administrator to create, manage and control electronic mailing lists. This system is based on a subscription model whereby users subscribe to discussion lists using an nominated email address which the list-server stores and uses to communicate with the user or groups of users in that specific communication context. The user interacts with the mailing list administrator indirectly using commands in the subject line such as "subscribe" and "unsubscribe" which allow a user to respectively join or leave a discussion list.

One disadvantage of this is that, depending on the management of the participant identity database, discussion list members' identities can be inadvertently revealed thus exposing them to risks such as spamming or simply by revealing their identity in a context where they wish to remain anonymous. Also, for short-lived discussion threads the LISTSERV approach is overly complex and generally requires the participation of an administrator to enable the creation of the discussion group. It is an object of the invention to provide a computer system and a method of operating a computer system which allows for the ad-hoc creation of email aliases for the purposes of creating and managing email-based communication contexts such as discussion groups.

### Disclosure of the Invention

This aim is achieved by means of the present invention which provides for a method of dynamically creating an email alias related to a communication context, characterized in that the method including the steps of:
- establishing one or more identification indicia, the indicia corresponding to identifying strings related to the communication context;
- establishing a parameter string comprising one or more of the identification indicia; and
- prepending the parameter string to a qualified domain name thereby creating an email alias which contains information relating to the communication context.

Thus for a specific communications context such as a mailing list or a similar ad hoc communications situation, a user or participant may create a dynamically created, or ad-hoc email alias which contains information sufficient to identify the communication context while maintaining, if required, the participants privacy. This method also allows the straightforward ad-hoc creation of short-lived email aliases on an on-demand basis which further reduces the number of emails transferred during a communication context. That is, the number of emails transferred between an email client and a mail server will be one, instead of the all the participant email addresses.

The identification indicia may include strings such as the discussion creators name or identifier, the number of participants in the communication context, the date of creation of the email address, group permissions and the lease period for the email alias.

The qualified domain name is preferably a fully qualified domain name having an MX record which resolves to a mail server having suitably modified software running thereon.

The invention also provides a mail server adapted to parse the email alias to extract the information in the prepended parameter string thereby identifying the specific communication context and distribute the email according to the characteristics, participants and nature of the communication context.

Data relating to the communication context characteristics, the participants and the nature of the communication context are preferably stored in a database on the mail server.

The invention also provides a mail client adapted to dynamically create an email alias according to the method as hereinbefore defined.

The invention further provides a mail client including a user interface configured to allow the user to:
- select ad-hoc discussion group creation;
- define one or more participants in the discussion group;
- define one or more identification indicia relating to the characteristics of the discussion group; and
- create an email alias incorporating embedded therein data related to the identification indicia which, along with a participant list and seed message, is then communicated to a mail server which distributes the message, by email, to participants in the list, whereby the reply address in that email is the email alias.

In an alternative embodiment, the users selection of the ad-hoc discussion group creation option causes a server to create an email alias incorporating embedded therein data related to the identification indicia which, along with a participant list and seed message, is then communicated to a mail server which distributes the message, by email, to participants in the list, whereby the reply address in that email is the email alias

The dynamically created email alias and participant list may be stored in a server database accessible to a mail client. The server is preferably a mail server.

The invention further provides for a method of distributing an email-based discussion list, the method including the steps of:
- receiving a message addressed with an email alias;
- parsing the email alias to extract discussion list information;
- forwarding a copy of the message to one or more users associated with the discussion list.

Preferably, information linking the one or more users to the discussion list is held in an alias database and is preferably stored on a server.

Preferably the email alias is created in accordance with the method as hereinbefore defined.

The alias database may be updated by means of a mail client which operates to vary the information such as by adding recipients, changing the expiry period of the discussion and similar.

The invention may also be applied to other communication contexts such as financial transactions, anonymous transactions or similar centralised and/or secure transactions.

### Brief Description of the Drawings

The present invention will now be described by way of example only and with reference to the drawings in which:
- Figure 1:: illustrates the general steps in the creation of an ad-hoc discussion group;
- Figure 2:: illustrates the steps in the dynamic creation, by a server, of an email alias for use in an ad-hoc discussion group;
- Figure 3:: illustrates the steps in the dynamic creation, by a mail client, of an email alias for use in an ad-hoc discussion group;
- Figure 4:: illustrates the expiry of an email alias created for use in an ad-hoc email discussion group;
- Figure 5:: illustrates the process of updating dynamic email alias information; and
- Figure 6:: illustrates the process of retrieving dynamic email alias information.

### Best Mode for Carrying Out the Invention

An important feature of the present invention is the process by which an ad-hoc or dynamic email alias is generated. An ad-hoc or dynamic email alias is a (relatively) short-lived email address which is created specifically for use in a pre-defined short-lifetime communications context. Such an email alias can be thought of as a central email link by which a many-to-one email distribution can be effected.

The primary exemplary context which will be discussed in the following description is that of an email-based discussion group.

However, it is to be understood that such email aliases may be extremely useful in other situations where low-latency or secure applications require the ad-hoc generation of one or more email aliases in such a way so as to allow their use in the specific contexts and where the management of the context can be aided by the use of a dynamic email alias. An example of such a context might be in a short-lived transaction such as an anonymous financial transaction where the parties may not want to be identified, but nevertheless are required to exchange emails.

In any event, as noted above, the specific context of concern here is that of creating and managing an email-based discussion list.

Ad-hoc or dynamic email alias creation is a process whereby a temporary email address is created for use in a particular context. The email alias is configured to contain information which can be used to identify and/or manage the specific context. In the present example, the information embedded in the dynamic email does not identify the participants in the discussion group. This information is stored on a server in the form of a database file "dyn_alias" which links a particular email alias with a group of participants.

In one embodiment, an ad-hoc email alias is dynamically created according to the following steps. As a preliminary point, a specified communication context will be assumed and in the present example this context is the creation and execution of a discussion list via email.

Broadly, the method includes the following steps.

One or more identification indicia are established. The indicia correspond to identifying strings related to the communication context, such as topic, lease period, number of participants etc.

Then, a parameter string is created made up of one or more of the identification indicia. This parameter string can be parsed to extract the individual data elements corresponding to the identification indicia.

The parameter string is then prepended to a qualified domain name thereby creating an email address which functions as an alias for that discussion group.

As the email alias contains the parameter string, the address itself embeds information linking the communication context data.

An example of an ad-hoc email alias might be:
Alias-4mg-6Oct20031231-10@hp.com

Here, the parameter string is: Alias-4mg-6Oct20031231-10.

This parameter string is made of identification indicia which are:
4: i.e.; four participants;
mg: an encoded string, in this case the initials of the creator of the discussion group;
6Oct20031231: the date of creation of the alias;
10: the lease period in days;
hp.com: the FQDN (a fully qualified domain name).

This ad-hoc email alias can be used in a number of communication contexts such as discussion lists, anonymous transactions etc. The technique can be applied to a discussion list communication context as follows.

Initially, the discussion is triggered by a user creating a discussion list using a suitably configured mail client.

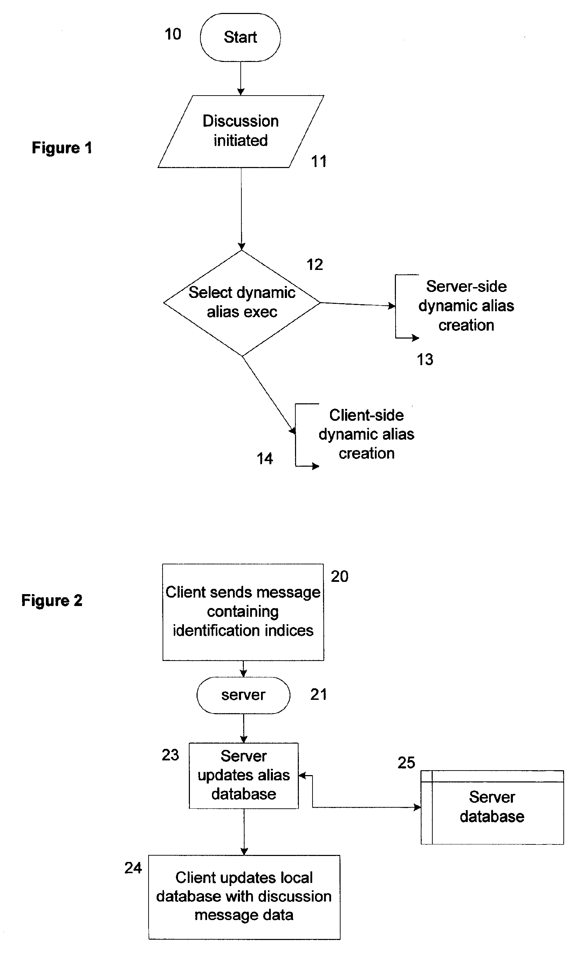

Referring to figure 1, a user creates (11) a discussion list by composing a new email and selecting "discussion list", or similar, as an option in an outgoing email dialog presented by the users email client as part of the email composition process.

Once the email client is notified of the users' intention to create a discussion list or thread, the next step is to gather the information necessary to create the dynamic email alias for that discussion list. At this point, it is noted that the system implementing the process can be configured for cli ent-side dynamic alias creation (14) or server-side dynamic email alias creation (13).

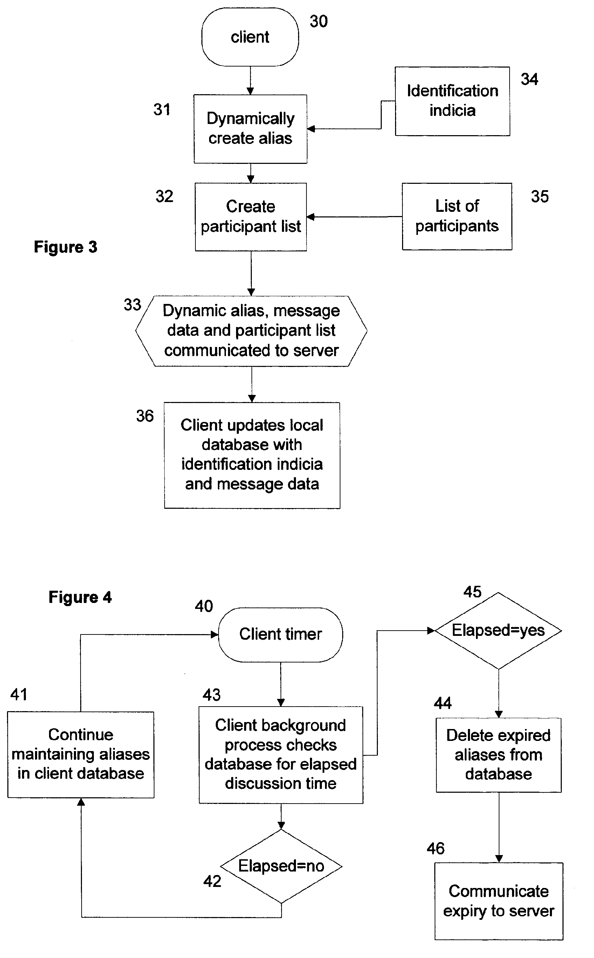

In the embodiment (shown in Figure 3), if the email alias is dynamically created (31) by the mail client (14), the process is as follows.

Firstly, the mail client executes an initialisation process whereby the identification indicia (34) are collected or defined (31). This can be done by querying the user who is creating the discussion list, by extracting pre-existing information from a database or a combination of the two. The user may be prompted for information such as the lease period for the discussion, i.e.; the length of time for which the discussion will occur, a topic identifier, a date (by default the date of creation of the dynamic aliases) and so on.

The list of participants is extracted from the list of recipients which the user can select in a conventional manner from an address book. To this end, the mail client may be modified so that in addition to the usual "to:", "cc:" and "bcc:" options, there may be a "disc:" option or similar which is used to select the selected recipients as being the target participants in an email discussion. The user may compose the email conventionally and it is to be understood that the email client can be configured so that process of creating the email and selecting recipients is largely analogous to the creation of a 'normal' email at this point.

The creation of the email alias may then be triggered automatically or by the user. In the latter case, the user may be prompted to create the dynamic alias by the email client. However, preferably, the dynamic email alias is created automatically when the user clicks on the "send" email function thus concealing most of the process from the creator of the discussion list.

In this manner the creation and operation of the discussion list can be seamlessly integrated into the normal functionality of the email client. Also from the users point of view, the traditional email sending paradigm is maintained as far as possible. This avoids confusion as the primary difference between sending a "one to many" email and starting a discussion list in accordance with the invention is the creation of the dynamic alias linking the participant list with the initial, or "seed" message, and the communication context.

The generated email alias, the participant list and the initial message data is then communicated to a mail server (33) and the client can update the local (client) database with the discussion list details.

The mail server stores this information in a database for the duration of the discussion (i.e.; the lease period).

The mail server then forwards the "seed" discussion email to the participants by way of their conventional email addresses which are defined in the one-to-many mapping {dyn_alias → real_email_addr} held in the server database. Thus, each recipient is unaware of the real email addresses of the other participants or indeed potentially their identity. This is because the originating email address in the each email relating to the discussion group is a single email alias which links the discussion list participants with the discussion topic.

If a participant replies to the discussion group, the email is sent to the email alias where it is then distributed by the mail server according to the dynamic email alias participant list.

Figure 2 illustrates the situation where the email alias is created by the mail server. The mail client collects the indicia information as described above and then sends a message (20) containing the identification indices to the server (21). The server (21) updates (23) the alias database (25), and the client updates the local database the discussion message data. This allows the discussion content to be monitored and stored as the discussion thread progresses.

Figure 4 illustrates the process whereby the lease period of the discussion is checked. A client timer (40) in the form of a client background process monitors the database and checks for the elapsed discussion time. If the lease period as defined in the email alias itself has expired, the alias is deleted from the local client database (44) and the server database (46). If the lease has not expired (42), the client process continues maintaining the alias in the database (41).

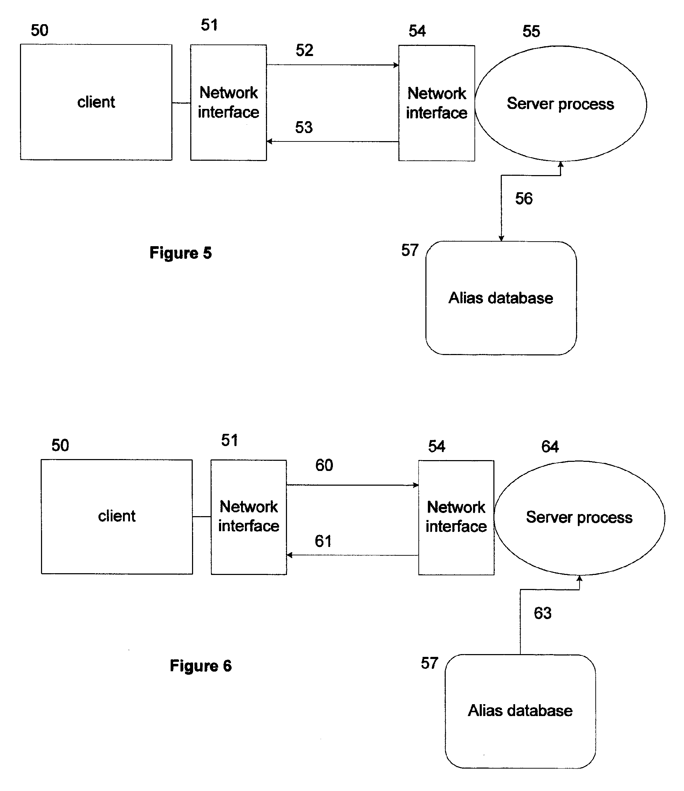

Figure 5 shows details of updating dynamic alias information stored on the mail server. An email client (50), communicates (52), via a network interface (51) to a server, via its network interface (54). The mail client sent the dynamically generated alias and the list of discussion group participants to the server process (55). The server process (55) is responsible for storing the alias in the servers alias database and rebuilding the database. (57). To this end, the server writes the clients alias information {dyn_alias:list of recipients} into the database. This is the database which is used for the alias expansion, i.e.,; {alias: email1, email2, email3...}. The server process (55) notifies (53) the client with the status of the updated alias database and the process is completed.

Figure 6 shows the process of retrieving the dynamic alias information. According to this process, the client queries the server process (60) to obtain information about the dynamically created alias. The server process (64) retrieves (63) the dynamic alias data from the database (57) and returns the data {dyn_alias} to the mail client.

Thus it can be seen that an ad-hoc privately generated email alias can be readily created and used to operate an email-based discussion list. This process provides privacy as the identities of the participants need not be revealed. The method also reduces the amount of email traffic as all discussion threads are directed via a central email alias.

It is envisaged that other communication contexts may use this technique. For example, a transaction may be executed using a trusted server in a fmancial transaction. In such a case, a securely generated email alias may be used for the parties to the transaction to communicate anonymously or securely. The ability to define a short-term lease period may also be very useful in such a context where sensitive message data such as credit card information might be stored on a mail server during the period of the transaction. To this end, the lease period may be set to an automatic expiry date/time for such a transaction.

Although the invention has been described by way of example and with reference to particular embodiments it is to be understood that modifications and/or improvements may be made without departing from the scope of the appended claims.

Where in the foregoing description reference has been made to integers or elements having known equivalents, then such equivalents are herein incorporated as if individually set forth.

## Claims

1. A method of dynamically creating an email alias related to a communication context, **characterized in that** the method includes the steps of:
- establishing one or more identification indicia, the indicia corresponding to identifying strings related to the communication context;
- establishing a parameter string comprising one or more of the identification indicia; and
- prepending the parameter string to a qualified domain name thereby creating an email alias which contains information relating to the communication context.

2. A method as claimed in claim 1 wherein the identification indicia include strings including one or more of the name or identifier of the creator of the communication context, the number of participants in the communication context, the date of creation of the email alias, group permissions and the lease period for the email alias.

3. A method of processing an email alias, said alias related to a communication context, including the steps of:
- parsing the email alias to extract identification indicia therefrom;
- identifying strings in the identification indicia corresponding to one or more of: data relating to a communication context creators name or identifier, the number of participants in the communication context, the date of creation of the email alias, group permissions and the lease period for the email alias.

4. A method as claimed in claim 3 including the step of sending an email message to the participants in the communication context.

5. A method of creating and/or managing a communication context including the step of creating an email alias according to the method of claim 1 or 2, including the additional step of creating an alias database which includes the email alias and information identifying one of more or more participants in the transaction.

6. A method as claimed in claim 5 including the step of sending a seed message to the one or more participants wherein the return email address associated with the seed message is the email alias.

7. A method as claimed in any preceding claim wherein the communication context is an email-based discussion.

8. A method as claimed in any preceding claim wherein the communication context is a financial transaction.

9. A method as claimed in claim 8 wherein the identification indicia includes financial data relating to one or more of the participants.

10. A mail server adapted to carry out the method as claimed in any preceding claim.

11. A mail server as claimed in claim 10 when dependant on any one of claims 6 to 8, further adapted to distribute the seed message to the recipients.

12. A client application adapted to carry out the method as claimed in any preceding claim.

13. A computer system adapted to carry out the method as claimed in any preceding claim, the system comprising a mail client adapted to receive as input, data relating to the identification indicia, the participants and communication context data, and a mail server adapted to store an email alias database containing information pertinent to the communication context wherein the email alias is created by the client application.

14. A computer system as claimed in claim 13 wherein the email alias is created by the mail server.

15. A computer system as claimed in claim 13 or 14 wherein an alias database is stored in the mail server, the alias database containing email aliases and data pertaining to corresponding communication contexts.

16. A client application including a user interface configured to allow a user to:
- select ad-hoc transaction creation;
- define one or more participants in the transaction;
- define one or more identification indicia relating to the characteristics of the transaction; and
- create an email alias incorporating embedded therein data related to the identification indicia which, along with a participant list and seed message, is then communicated to a server which distributes the message, by email, to participants in the transaction, whereby the reply address in that email is the email alias.

17. A client application as claimed in claim 16 wherein the transaction is an email-based discussion, a financial transaction, an anonymous email transaction or a file transfer transaction.

18. A client application as claimed in claim 16 wherein the users selection of the ad-hoc transaction creation option causes a server to create an email alias incorporating embedded therein data related to the identification indicia which, along with a participant list and seed message, is then communicated to a mail server which distributes the message, by email, to participants in the list, whereby the reply address in that email is the email alias

19. A method of distributing an email-based discussion list, the method including the steps of:
- receiving a message addressed with an email alias created in accordance with claim 1 or 2;
- parsing the email alias to extract discussion list information;
- forwarding a copy of the message to one or more users associated with the discussion list.

20. A method as claimed in claim 19 wherein information linking the one or more users to the discussion list is held in an alias database on a server or on a machine running a client application.

21. A method as claimed in claim 20 wherein the alias database is updated by means of the client application which operates to vary the information such as by adding recipients, changing the expiry period of the discussion and similar.

22. A client or server adapted to operate in accordance with any of claims 1 to 8 and 19 to 21.
